# EUROPEAN PATENT SPECIFICATION

(11) **EP 3 360 030 B1**
(45) Date of publication and mention of the grant of the patent: **17.11.2021**
(21) Application number: 16854277.7
(22) Date of filing: 06.10.2016
(51) Int. Cl.: G06F 3/044, G06F 3/045, G06F 3/0354, G06F 3/041

(54) **REDUNDANT TOUCH PANEL**
REDUNDANTE BERÜHRUNGSTAFEL
PANNEAU TACTILE REDONDANT

(30) Priority: 06.10.2015 US 201514876382; 06.10.2015 US 201514876393
(43) Date of publication of application: 15.08.2018
(73) Proprietor: American Panel Corporation, Alpharetta, GA 30005 (US)
(72) Inventor: MAHDI, Ken, Alpharetta, GA 30005 (US)
(74) Representative: FRKelly
(86) International application number: PCT/US2016/055634
(87) International publication number: WO 2017/062543

(56) References cited:
- US-A1- 2006 013 967
- US-A1- 2006 038 635
- US-A1- 2008 204 419
- US-A1- 2008 218 492
- US-A1- 2010 271 324
- US-A1- 2011 095 999
- US-A1- 2013 127 790
- US-A1- 2014 198 417
- US-B1- 6 842 672

## Description

### TECHNICAL FIELD

Embodiments of the present invention generally relate to touch screen displays.

### BACKGROUND AND SUMMARY OF THE INVENTION

Electronic touch panel displays are used in many commercial applications including ATMs, automobiles, informational displays, personal computers, cell phones, and the like. Such displays are advantageous as the content may be easily changed and the displays are interactive. For many applications having an electronic touch panel display is desirable, but requirements or needs for redundancy has prevented the use of such displays.

Examples of such applications include, but are not limited to, commercial aviation, space flight, and military applications, where redundancy measures are demanded to ensure continued performance of equipment in the event of a partial failure. In these and other applications there may also be visibility requirements to ensure performance under extreme environmental conditions. These may include ability to withstand high levels of solar loading and visibility in bright ambient conditions. Such stringent requirements are demanded because of the potential consequences of failure. Therefore, it is desirable to provide an electronic touch panel display meeting visibility requirements and having redundancy measures.

Finally, in these and other applications, electromagnetic interference (EMI) and EMC becomes an issue as there are often multiple pieces of electronic equipment operating in close proximity. Each device may emit electromagnetic energy, which can cause EMI with the operation of the other unit resulting in interrupted performance. EMC is the ability for multiple devices to work in the same electromagnetic environment. Therefore, it is additionally desirable to provide the aforementioned electronic touch panel display also having EMC endurance capabilities that limit EMI.

The invention is set out in independent claims 1 and 3. Further additional aspects are recited in the dependent claims.

These measures provide redundancy and preserve the operability of the display under partial failure.

The display may be made such that it is adapted to comply with military specifications for use in military applications, such as aviation. US 2008/204419, GB 2510600 and US 2011/095999 are examples of known touch screen displays.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:
**Figure 1** is a perspective view of an exemplary embodiment of the present invention;
**Figure 2** is a top view of the device of **figure 1****;**
**Figure 3** is a side view of the device of **figure 1****,** additionally indicating Detail A;
**Figure 4** is a detailed side view of Detail A of **figure 3****;**
**Figure 5** is a detailed side view of the device of **figure 1****,** illustrated with a stylus contacting the touch panel;
**Figure 6** is a top view of another exemplary embodiment of the present invention;
**Figure 7** is a side view of the device of **figure 6****,** also indicating Detail B;
**Figure 8** is a detailed side view of Detail B as indicated in **figure 7****;**
**Figure 9A** is a front view of an exemplary touch panel in accordance with the present invention;
**Figure 9B** is a front view of another exemplary touch panel in accordance with the present invention;
**Figure 10** is an exploded detailed side sectional view of an exemplary embodiment of a display panel in accordance with the present invention; and
**Figure 11** is a plan view of an exemplary circuit in accordance with the present invention.

### DETAILED DESCRIPTION OF EXEMPLARY EMBODIMENT(S)

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/ or components, but do not preclude the presence or addition of one or more other features, integers, steps, operations, elements, components, and/or groups thereof.

Embodiments of the invention are described herein with reference to illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

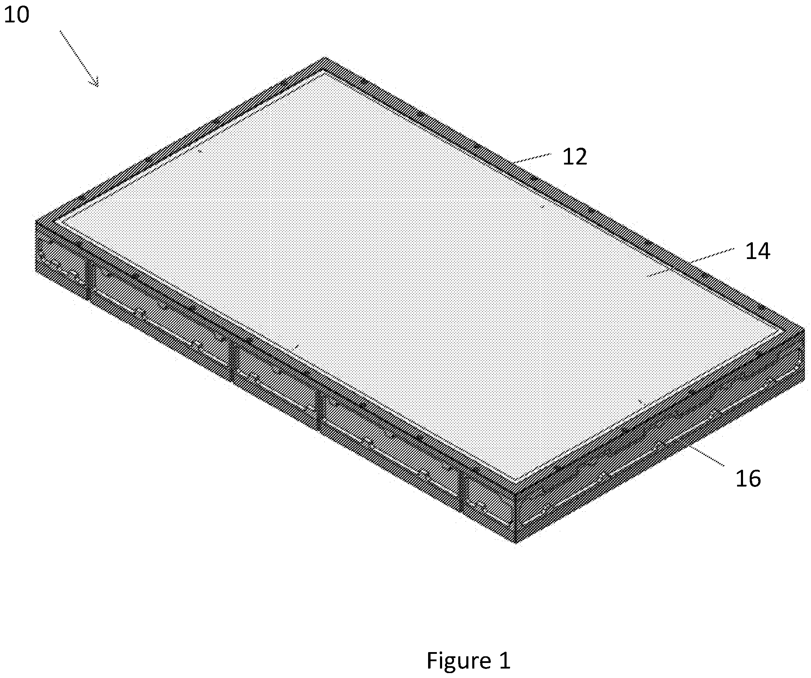

**Figure 1** through **figure 5** illustrates an exemplary embodiment of the present invention. An electronic display and touch screen assembly **10** (hereinafter the "assembly") consists of a touch panel **14** located immediately above and extending in parallel with an electronic display **16.** In embodiments of the present invention the electronic display **16** is a normally black liquid crystal display (LCD), such as the AMLCD. In examples not covered by the scope of the claims, other displays types such as plasma, Light Emitting Diode (LED), Cathode Ray Tube (CRT), and the like are contemplated. In exemplary embodiments of the present invention, the assembly **10** and related components, including but not limited to the electronic display **16**, support 2560 × 1024 resolution.

As will be explained in greater detail in subsequent figures, the touch panel **14** is a resistive touch panel or a projected capacitive touch panel. The touch panel **14** may be wet laminated to the electronic display **16** and a gasket **12** is provided that frames the touch panel **14** and the electronic display **16**. Thereby protecting the assembly **10** and creating a seal therebetween. Other known methods of joining the touch panel **14** and the electronic display **16** are contemplated. The assembly **10** may include a heating device (not shown) that permits the touch panel **14** to operate in extreme conditions such as cold weather environments. The touch panel **14** may be in electronic communication with the electronic display **16** by flexible circuit, or the like. The touch panel **14** may be adapted to receive input from, for example, a human finger, including when gloved, or a stylus.

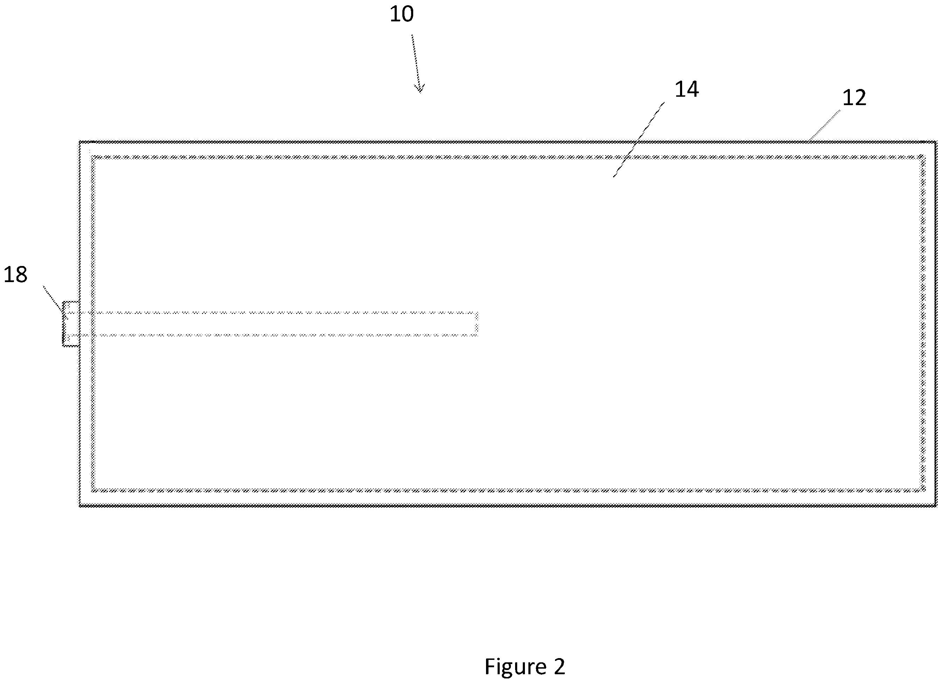

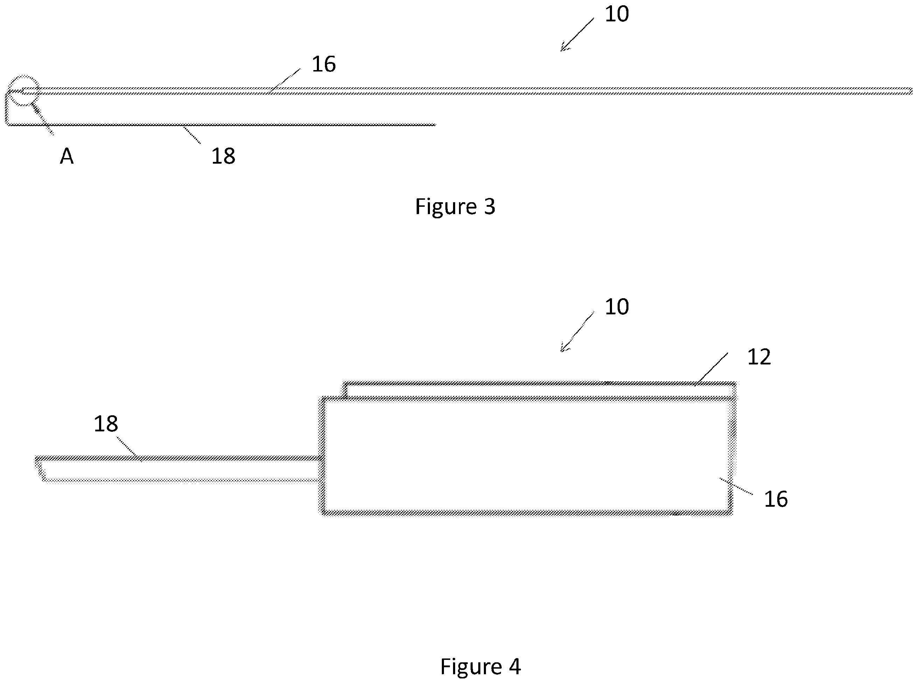

As best illustrated in **figure 2** though **figure 4****,** the assembly **10** further comprises a channel **18.** The channel **18** may extend from any side of the assembly **10** or from the back thereof. The channel **18** is configured to permit a pair of independent input/output devices to travel therethrough. When both input/output devices are operable, each provides input/output signals for a respective portion of the electronic display **16**. This provides a redundancy measure such that should one input/output device fail, the remaining operable input/output device may automatically provide input/output signals for the remaining portion of the electronic display **16** and thus maintain the operability of the assembly **10**. In other exemplary embodiments of the present invention, each input/output device is capable of providing input/output for the entire electronic display **16**.

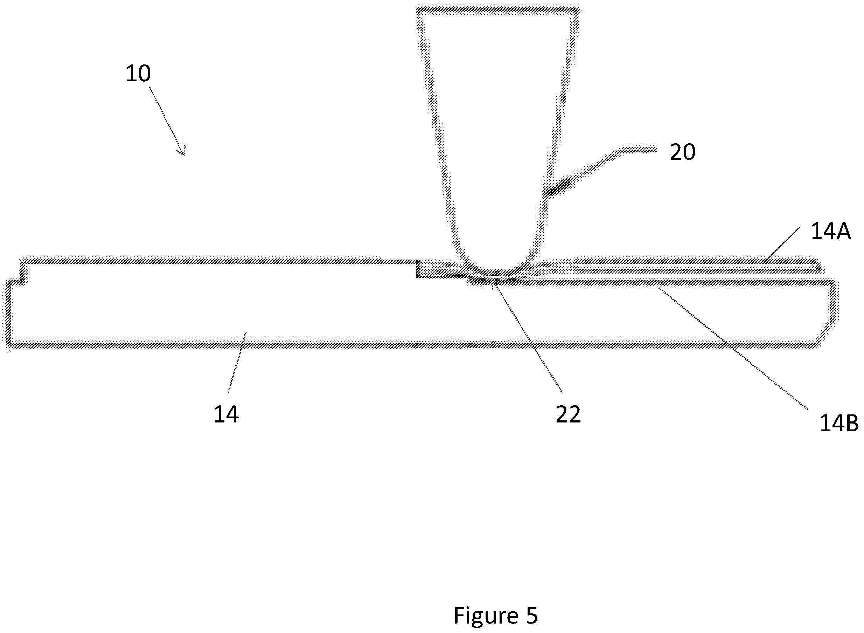

As discussed, in some exemplary embodiments of the present invention, the touch panel **14** is a resistive touch screen. In such embodiments, as best illustrated in **figure 5** the touch panel **14** may be comprised of two spaced apart surfaces where a top circuit layer **14A** is spaced apart from a bottom circuit layer **14B**. The two layers extend over the same surface and are substantially parallel. They may be spaced apart by their placement within a housing, such as the gasket **12.** Alternatively, the top **14A** and bottom circuit layers **14B** may be spaced apart by individual spacer elements (not shown). The top circuit layer **14A** is sufficiently flexible such when contacted under sufficient force by a stylus **20,** the top circuit layer **14A** flexes to contact the bottom circuit layer **14B.** Such exemplary operation is illustrated at a contact point **22.** The top circuit layer **14A** may be sufficiently elastic, however, to return to its original position after the force of the stylus **20** is removed. The stylus **20** may be a human finger, including a gloved hand, or an artificial device.

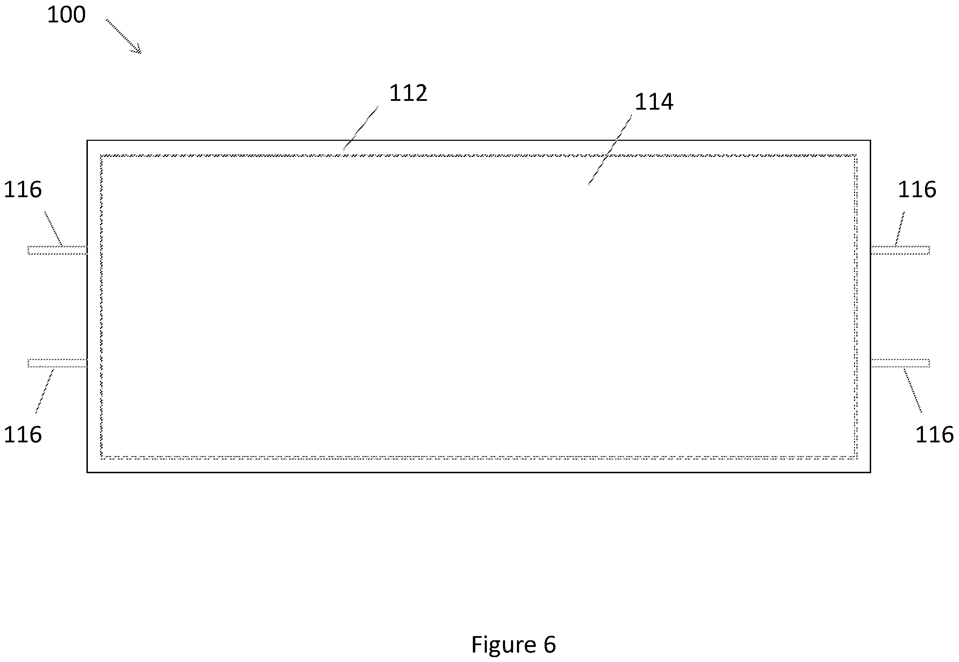

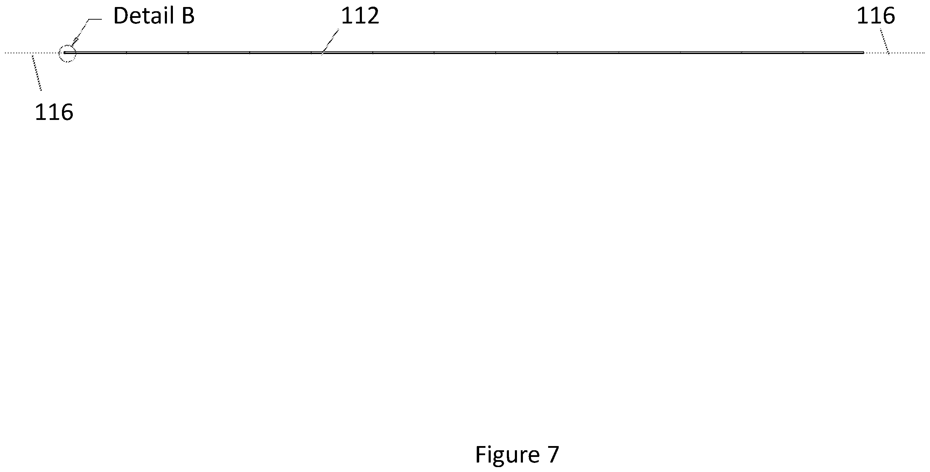

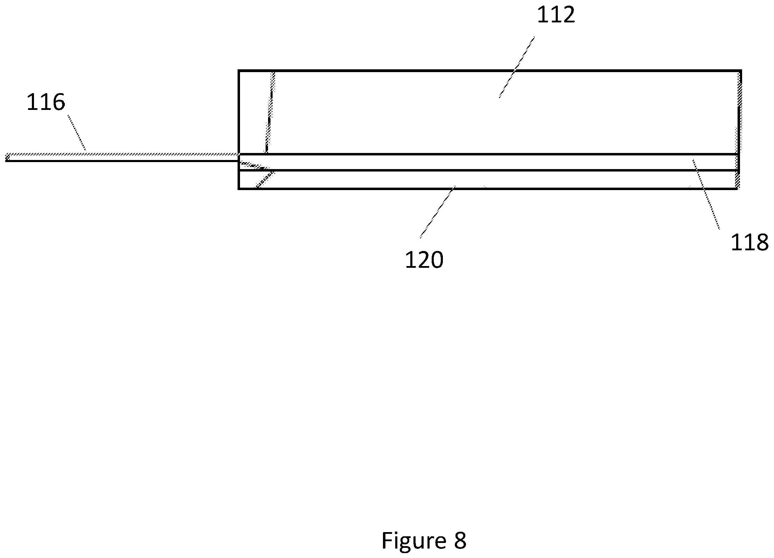

**Figure 6** through **figure 8** illustrate another exemplary embodiment of an electronic display and touch screen assembly **100** (hereinafter the "assembly") in accordance with the present invention. The assembly **100** may be comprised of a touch panel **114** located immediately above and extends in parallel with an electronic display **112**.

Again, the touch panel **114** is a resistive or a projected capacitive touch panel and may be configured to receive multiple inputs. The touch panel **114** may be comprised of a top circuit layer **118** and a bottom circuit layer **120**. The top and bottom circuit layers **118** and **120** may be spaced apart or immediately adjacent to one another. Additionally, the top and bottom circuit layers **118** and **120** may be located spaced apart from or immediately adjacent to the electronic display **112**. The touch panel **114** may be wet laminated to the electronic display **112** and a gasket is provided that frames the two layers and creates a seal between the touch panel **114** and the electronic display **112**. Thereby protecting the assembly **100** from harsh environmental conditions and providing durability. Other known methods of joining the touch panel **114** and the electronic display **112** are contemplated. The assembly **100** may include a heating device (not shown) that permits the assembly **100** to operate in extreme conditions such as cold weather environments. The touch panel **114** may be in electronic communication with the electronic display **112** by flexible circuit, or the like.

The assembly **100** additionally comprises a series of channels **116**. The channels **116** comprise shielding configured to reduce or eliminate EMI and promote EMC. In exemplary embodiment of the present invention, the assembly **100** comprises four channels **116**, a pair of which each extend from the left and right sides of the assembly, respectively. However, any number of channels **116** extending from any part of the assembly **100** is contemplated. The channel **116** is adapted to house a pair of independent input/output devices (not shown), each extending though one of the channels **116**. When both input/output devices are operable, each may provide input/output signals for a respective portion of the assembly **100**. In exemplary embodiments of the present invention, each controls substantially half of the assembly **100**. In such an embodiment, if one input/output device fails, the remaining operable input/output device provides input/output signals for the remaining half the assembly **100** and thus maintains operability. However, in other exemplary embodiments of the present invention, each input/output device is capable of providing input/output for the entire assembly **100**. This provides a redundancy measure. In such an embodiment, if one input/output device fails, the remaining operable input/output device may provide input/output signals for the assembly **100** and thus maintain operability.

In exemplary embodiments of the present invention, the assembly **100** and related components are configured to remain operable in atmospheric pressure conditions ranging from sea level to 16754 meters (55000 feet) altitude, including with a rate of change up to 36 meter (120 feet) per second. Similarly the assembly **100** and related components are configured to withstand 95% humidity, temperature changes between 55 and 90 degrees Celsius (C) at a rate of 40 degrees C per minute with a maximum operating temperature of -45 degrees C to 71 degrees C and prolonged storage temperatures of -55 degrees C to over 90 degrees C. All coatings and materials in the assembly **100** may be configured to withstand, without degradation, commonly used solvents such as water, acetone, lacquer thinner, optical adhesive, and the like. Similarly, all coatings and materials in the assembly **100** may be configured to withstand, without degradation, commonly used cleaners such as ammonia, detergent, soap, and the like.

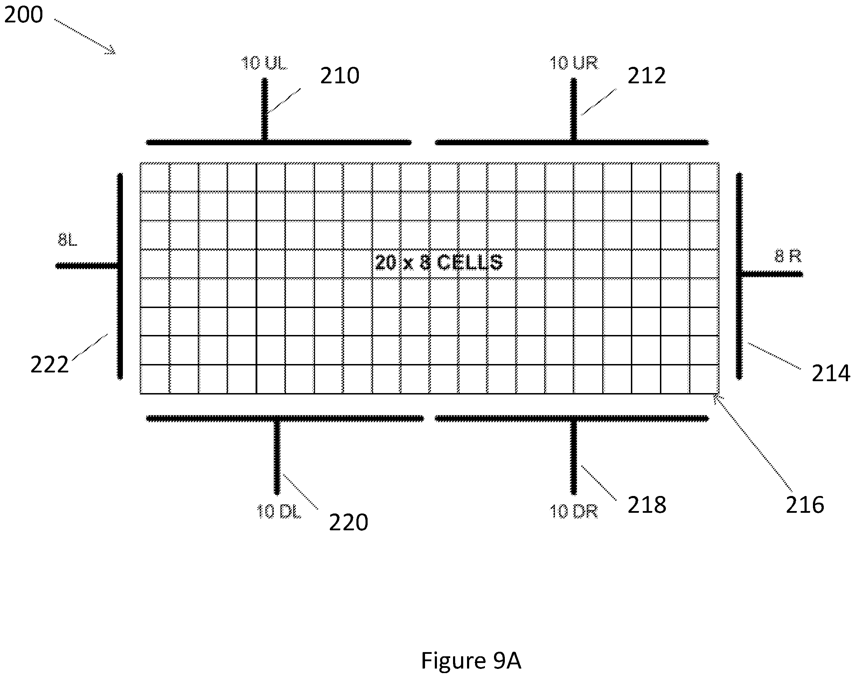

**Figure 9A** is a front view of an exemplary touch panel **200** in accordance with the present invention wherein the touch panel **200** is a resistive type touch panel. The touch panel **200** comprises a grid **216** of vertically and horizontally extending electrodes. In exemplary embodiments of the present invention, the grid **216** may be comprised of two adjoining, seamless 8 × 10 sections formed by the vertically and horizontally extending electrodes, effectively providing an 8 × 20 grid and defining a first and a second grid section. Each of the first and second grid sections is operated by an independent input/output device. In exemplary embodiments of the present invention, each of the first and the second grid sections corresponds to substantially half of the touch panel **200.** It is notable, however, that any size grid **216** having any number of vertically and horizontally extending electrodes and corresponding grid sections are contemplated. The grid **216** is surrounded by a series of receivers **210, 212, 214, 218, 220,** and **222.** The pair of receivers **214** and **222** extend along the right and left edges of the grid **216**, respectively. The pair receivers **210** and **212** extend along the left and the right portions of the upper edge of the grid **216**, respectively. Finally, the pair of receivers **220** and **218** extend along the left and the right portions of the lower edge of the grid **216**, respectively.

In an exemplary embodiment of the present invention, the receivers **210, 220,** and **222** may be placed to receive signals generated by touching the first grid section. Likewise, the receivers **212, 214,** and **218** may be placed to receive signals generated by touching the second grid section. The grid **216** is sized to cover the entirety of the electronic display **16**. The vertically extending receivers **222** and **214** may be configured to receive input regarding the vertical (Y) position of the input. Similarly, the horizontally extending receivers **210, 212, 218,** and **220** may be configured to receive input regarding the horizontal (X) position of the input.

In exemplary embodiments of the present invention, each of the vertically extending receivers **222** and **214** may be capable of receiving input signals regarding the Y position of the input from both the first and second grid section. The horizontally extending receivers **210** and **220** may be capable of receiving input signals regarding the X position of the input from the first grid section. Similarly, the horizontally extending receivers **212** and **218** may be capable of receiving input signals regarding the X position of the input from the second grid section.

The grid **216** and the receivers **210, 212, 214, 218, 220,** and **222** may be configured to respond to a stylus, a human finger, or a gloved hand. The grid 216 and the receivers **210, 212, 214, 218, 220,** and **222** may be configured to respond to an activation pressure of under 0.8N and may allow for multiple touch inputs to be measured simultaneously.

The first and second grid sections and corresponding receivers provides a redundancy measure. When both the first and the second grid sections are operable, the entire touch panel 200 may be utilized. Should one of the first or the second grid sections or the corresponding receivers be rendered inoperable, the remaining operable grid section would accept touch input for the portion of the grid **212** that it controls. For example, if the receiver **210, 222,** and/or **220** should fail, the image that was being shown on the electronic display **112** would be shifted by a controller onto just the portion of the electronic display **112** corresponding to the remaining operable first or second grid sections such that the assembly **100** remains fully functional, albeit over a smaller area. In examples not covered by the claims, in such circumstances half of the assembly **100** may remain operable and the image may not be shifted.

It is notable that while the touch panel **200** may be described in terms of operating with a particular embodiment described herein, it is contemplated that the touch panel **200** may be utilized with any of the embodiments described herein.

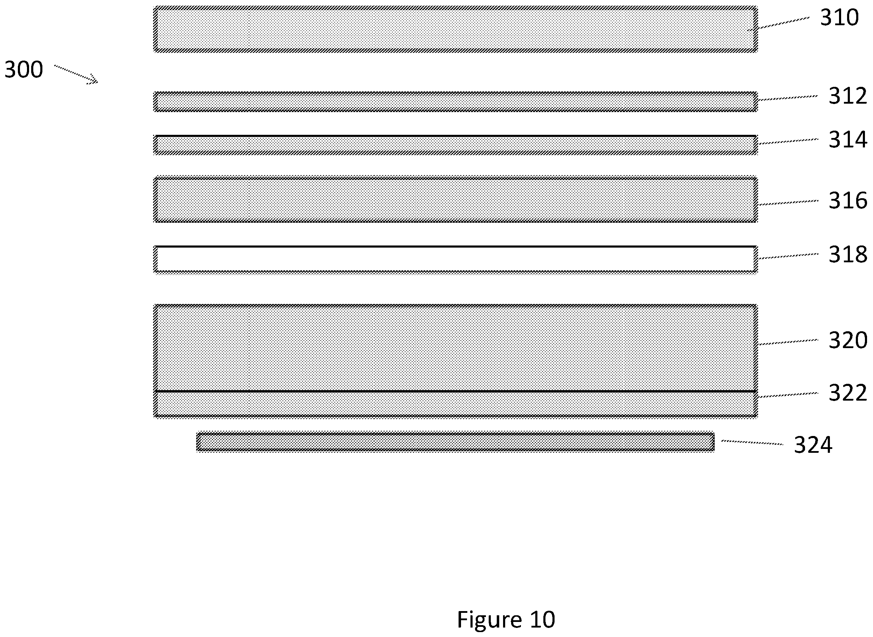

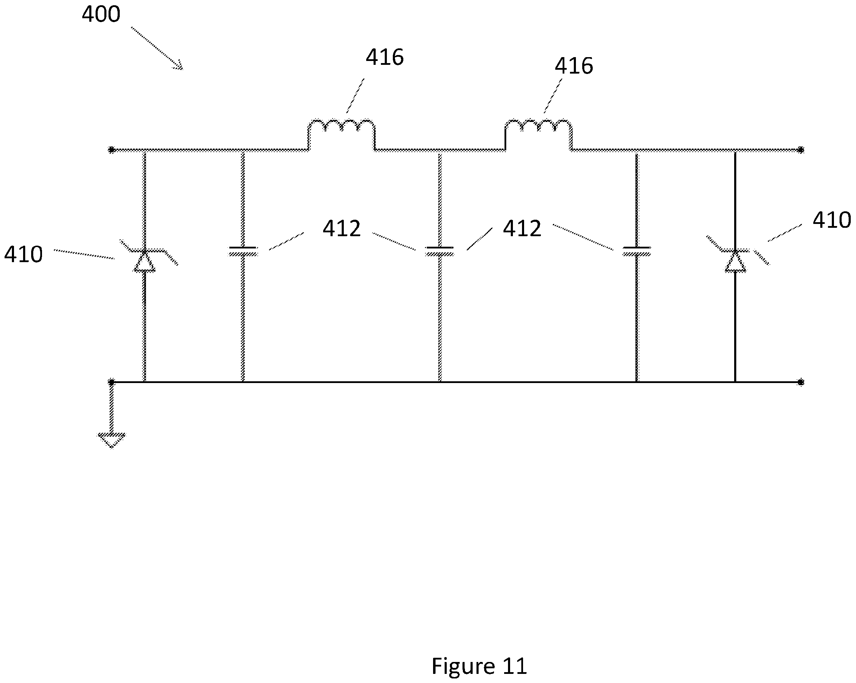

As will be discussed in greater detail in subsequent figures, the touch panel **200** may be utilized in conjunction with a bottom glass layer **320** of an exemplary display panel **300** illustrated in **figure 10****,** and each line of the touch panel **200** grid **216** comprises a circuit **400**, such as the one illustrated in **figure 11****.**

In one exemplary embodiment of the present invention, the touch panel active area may be 506.88 mm × 202.75 mm and the activation force needed may be in the range of 0.05N - 0.8N and may provide a minimum of two point multi-touch, and may have an operating life of over 1 million hits. In other embodiments of the present invention all of the above dimensions and values may change to the desire of the user or manufacturer.

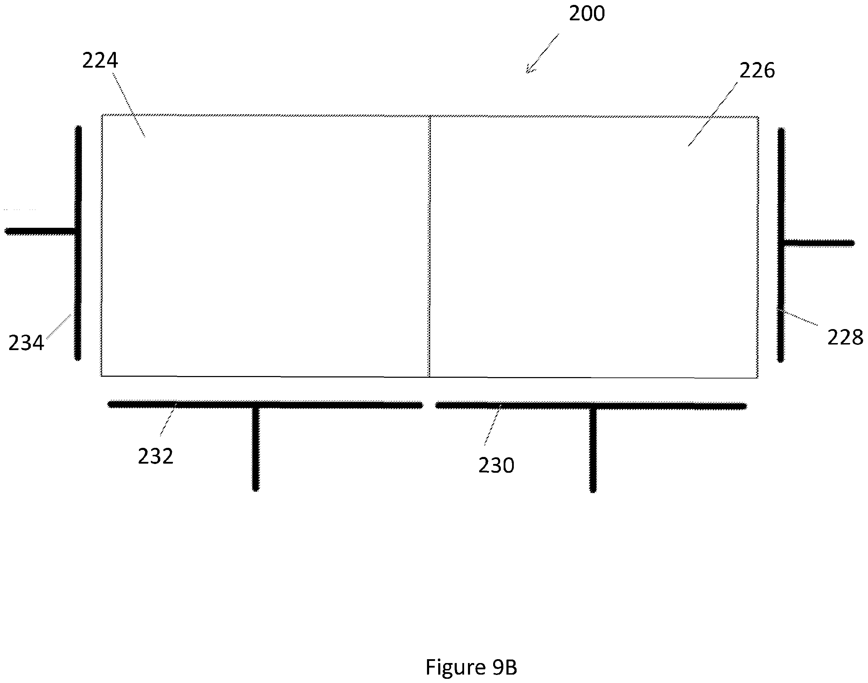

**Figure 9B** is similar to **Figure 9A****,** but presents an alternative exemplary embodiment of the present invention wherein the touch panel **200** is a projected capacitive touch panel. The touch panel **200** comprises a first touch sensor **224** and a second touch sensor **226**. The first **224** and the second touch sensors **226** are located immediately adjacent to one another and provide a seamless touch screen surface that is indistinguishable in functionally to a user. The first **224** and the second touch sensors **226** may additionally be located immediately above the electronic display **112**. Each of the first and the second touch sensors **224** and **226** is in communication with an independent input/output device. In this way, if one input/output device or one touch sensor fails, the remaining touch sensor will remain operable. In exemplary embodiments of the present invention, each of the first and the second touch sensors **224** and **226** may comprise multiple input/output devices, such that if one input/output device fails both touch sensors **224** and **226** will remain operable, thus providing redundancy.

The first touch sensor **224** additionally comprises a first vertical sensor **234** and a first horizontal sensor **232.** The first touch sensor **224** controls a first portion of the touch panel **200**. Likewise, the second touch sensor **226** additionally comprises a second vertical sensor **228** and a second horizontal sensor **230** and controls a second portion of the touch panel **200.** In exemplary embodiments of the present invention, each of the touch sensors **224** and **226** corresponds to substantially half of the electronic display **112**. The vertical touch sensors **234** and **228** may be configured to sense the vertical (Y) location of a touch input, while the horizontal sensors **232** and **230** may be configured to sense the horizontal (X) location of a touch input. The touch panel **200** may be sized to cover the entirety of the electronic display 112 and substantially all of the assembly **100**.

In exemplary embodiments of the present invention, the first **224** and second touch sensors **226** may be configured to respond to a stylus or a human finger, including a gloved hand. The first **224** and second touch sensors **226** may be configured to respond to an activation pressure of less than 100g and may allow for multiple touch inputs to be measured simultaneously. The touch panel **200** may be configured to receive at least ten points of touch simultaneously and respond to pinching and rotational gestures.

The use of the first **224** and the second touch sensors **226** provides a redundancy measure. When both the first **224** and the second touch sensors **226** are operable, the entire touch panel **200** may be utilized. Should one of the first **224** or the second touch sensors **226** be rendered inoperable, the remaining operable touch sensor **224** or **226** would accept touch input for the portion of the touch panel **200** that it controls. For example, if touch sensor **224** fails, the image that was being shown on the entire electronic display **112** would be shifted by a controller onto just the portion of the electronic display **112** controlled by the remaining operable touch sensor **226**. In this way, the assembly **10** remains fully functional, albeit over a smaller area. In other exemplary embodiments not covered by the claims, if one of the first **224** or the second touch sensors **226** be rendered inoperable the corresponding portion of the electronic display **112** may simply be turned off. In still other examples not covered by the claims, the electronic display **112** may remain unchanged but touch input will only be accepted from the remaining operable touch sensor **224** or **226**.

As will be discussed in greater detail in subsequent figures, the touch panel **200** may be utilized in conjunction with a bottom glass layer **320** of an exemplary display panel **300** illustrated in **figure** 10, and each line of the touch panel **200** matrix comprises a **400** such as the one illustrated in **figure** 11.

In one exemplary embodiment of the present invention, the touch panel active area may be 506.88 mm × 202.75 mm and may have an operating life of over 1 million hits. Other embodiments of the present invention can vary in size, operating life, touch actuation force, etc., at the discretion of the user or manufacturer.

**Figure 10** is an exploded detailed side sectional view of the exemplary display panel **300** in accordance with the present invention, such for use with the electronic display **16**. A cover glass **310** may form the top layer of the display panel **300**. The cover glass **310** may comprise an anti-smudge, anti-reflective coating. A linear polarizer **312** followed by a quarter wave retarder **314** may be located below the cover glass **310** and above a top glass **316**. The quarter wave retarder **314** may be configured to withstand high temperatures. An optically clear adhesive (OCA) layer **318** may be placed between the top glass **316** and the bottom glass 320.

The bottom glass **320** may be located below the top glass **316** but above an indium tin oxide (ITO) layer **322**. In exemplary embodiments of the present invention, the touch panel **200** will be located in the bottom glass **320** layer. The ITO layer **322** may be located immediately below and be affixed to the bottom glass **320**. The ITO layer **322** may act as an EMI shielding layer, thus promoting EMC. In exemplary embodiments of the present invention, the ITO layer **322** may extend beyond the bottom glass **320** by 3mm on all sides. Finally, a final quarter wave retarder **324** may form the bottom layer of the display **300**. The final quarter wave retarder **324** may have a smaller area than the previous layers, which may all have substantially the same surface area. Such a configuration permits the display panel **300** to be visible in high ambient light conditions and operable under high levels of solar loading. In exemplary embodiments of the present invention the display panel **300**, the assembly **100**, and other related components are configured to withstand prolonged exposure to solar radiation with a normal flux of 820,19 W/m² (260 BTU/ft²) at sea level atmospheric pressure and 55 degrees C.

Each of these layers may extend in parallel with the other layers. Each of these layers may also be spaced apart from one another and be of various thicknesses. In exemplary embodiments of the present invention, the layers may be immediately adjacent to, secured to, or integrally formed with one another. In exemplary embodiments of the present invention, the cover glass **310** may be a 0.15mm micro sheet. In other embodiments, the cover glass **310** may be 0.5mm thick. The top glass **316** may also be 0.15mm thick, while the bottom glass may be 1.1mm thick. The ITO layer **322** may be 3mm thick. While these thicknesses are exemplary, they are not intended to be limiting, any functional thicknesses are contemplated. It is also notable that adhesive layers may be placed between any of the layers of the display panel **300.**

It is notable that while exemplary display panel **300** may be described in terms of operating with a particular embodiment described herein, it is contemplated that the display panel **300** may be utilized with any of the embodiments described herein.

**Figure 11** illustrates an exemplary circuit **400** in accordance with the present invention. The exemplary circuit **400** is configured to minimize EMI and maximize EMC. Each line of the sensors **214** and **212** may be comprised of the circuit **400.** It is contemplated that any number of the circuits **400** may be utilized in communication with one another.

The circuit **400** is used with the assembly **10** or the assembly **100** in conjunction with the touch panels **14** and **114,** respectively. It is notable that while exemplary circuit **400** may be described in terms of operating with a particular embodiment described herein, it is contemplated that the circuit **400** may be utilized with any of the embodiments described herein.

The circuit **400** comprises a pair of zener diodes **410** in parallel with and located on either side of a series of capacitors **412.** An inductor **416** is placed in series between each capacitor **412.** In exemplary embodiments of the present invention, three capacitors **412** are placed in parallel, and an inductor **416** is placed in series between each of said capacitors **412**. Other arrangements are contemplated.

## Claims

1. A touch panel assembly with redundancy and electromagnetic interference (EMI) reduction features comprising:
a housing;
an electronic display (16/112) located within said housing and adapted to display images;
a resistive touch panel (14/114) located within said housing and comprising a pair of adjoining, seamless grid sections (216) and:
a pair of upper horizontal receivers (210, 212) positioned adjacent to an upper edge of the resistive touch panel (14/114) and configured to receive electrical signals generated therefrom;
a pair of lower horizontal receivers (218, 220) positioned adjacent to a lower edge of the resistive touch panel (14/114) and configured to receive electrical signals generated therefrom; and
a pair of vertical receivers (214, 222) positioned adjacent to right and left edges of the resistive touch panel (14/114) and configured to
receive electrical signals generated therefrom;
a gasket (12) that provides a substantially air tight seal between said electronic
display (16/112) and said resistive touch panel (14/114);
a first and second input/output device in communication with said electronic display (16/112) for independently operating each of said seamless grid sections (216);
a channel (18) comprising EMI shielding, wherein said channel (18) extends from within said housing, through an edge thereof, to an area outside of said housing, wherein said first and second input/output devices are housed within said channel (18), said pair of input/output devices extending through said channel (18); and
a controller in communication with the electronic display (16/112) and the resistive touch panel (14/114), wherein said controller is configured to shift the image displayed such that the displayed image corresponds entirely to one side of said pair of adjoining, seamless grid sections (216) if one of said seamless grid sections (216) is rendered inoperable, wherein the controller is further configured to automatically change the input/output device utilized if one of said input/output devices is rendered inoperable;
wherein said electronic display (16/112) is a liquid crystal display;
wherein said resistive touch panel (14/114) is located above and in parallel with said electronic display (16/112);
wherein each line of the touch panel grid (216) comprises an comprise an electronic circuit (400); and
wherein each of the electronic circuits (400) comprises a first zener diode (410) in parallel with a number of capacitors (412), where an inductor (416) is provided between each adjoining pair of said number of capacitors (412), wherein a last one of said number of capacitors (412) is followed by and in parallel with a second zener diode (410).

2. The assembly of claim 1 wherein:
the electronic display (16/112) is comprised of a cover glass (310) located above a linear polarizer (312) located above a quarter wave retarder (314) located above a top glass (316) located above an optically clear adhesive (318) located above a bottom glass (320) located above an indium tin oxide layer (322) located above a quarter wave retarder (324); and
the cover glass (310) comprises an anti-reflective, anti-smudge coating.

3. A touch panel assembly with redundancy and electromagnetic interference (EMI) reduction features comprising:
an electronic display (16/112);
a projected capacitive touch panel (200) comprising:
a first and second adjoining, seamless touch pads (224/226) defining side edges;
a first and second vertical sensor (234/228) positioned adjacent to the side edges and positioned to receive electrical signals generated from the first and second touch pads (224/226);
a first and second horizontal sensor (230/232) positioned along a horizontal edge of the projected capacitive touch panel (200) and adjacent to the first and second touch pads (224/226) and configured to detect electrical signals generated from the first and second touch pads (224/226);
a first and second input/output device in communication with said electronic display for independently operating said first and second touch pad (224/226);
a sealing gasket (12) configured to provide a substantially air tight seal between said electronic display (16/112) and said projected capacitive touch panel (200); and
a controller in communication with the electronic display (16/112) and the projected capacitive touch panel (14/114), wherein said controller is configured to shift the image displayed such that the displayed image corresponds entirely to one side of said touch pads (216) if one of said touch pads (224, 226) is rendered inoperable, wherein the controller is further configured to automatically change the input/output device utilized if one of said input/output devices is rendered inoperable;
wherein said electronic display (16/112) is a liquid crystal display;
wherein said projected capacitive touch panel (200) is located above and in parallel with said electronic display (16/112);
wherein each line of the touch matrix comprises an electronic circuit (400); and
wherein each of the electronic circuits (400) comprises a first zener diode (410) in parallel with a number of capacitors (412), where an inductor (416) is provided between each adjoining pair of said number of capacitors (412), wherein a last one of said number of capacitors (412) is followed by and in parallel with a second zener diode (410).

4. The assembly of claim 3 wherein:
the electronic display (16/112) is comprised of a cover glass (310) located above a linear polarizer (312) located above a quarter wave retarder (314) located above a top glass (316) located above an optically clear adhesive (318) located above a bottom glass (320) located above an indium tin oxide layer (322) located above a quarter wave retarder (324); and
the cover glass (310) comprises an anti-reflective, anti-smudge coating.

## Patentansprüche

1. Touch-Panel-Anordnung mit Redundanz und Merkmalen zur Verringerung von elektromagnetischen Störungen (EMI), umfassend:
ein Gehäuse;
ein elektronisches Display (16/112), das in dem Gehäuse angeordnet ist und dazu angepasst ist, Bilder anzuzeigen;
ein resistives Touch-Panel (14/114), das in dem Gehäuse angeordnet ist und ein Paar aneinander angrenzende nahtlose Rasterabschnitte (216) umfasst, und:
ein Paar obere horizontale Empfänger (210, 212), die einer Oberkante des resistiven Touch-Panels (14/114) benachbart positioniert sind und dazu konfiguriert sind, davon erzeugte elektrische Signale zu empfangen;
ein Paar untere horizontale Empfänger (218, 220), die einer Unterkante des resistiven Touch-Panels (14/114) benachbart positioniert sind und dazu konfiguriert sind, davon erzeugte elektrische Signale zu empfangen; und
ein Paar vertikale Empfänger (214, 222), die einer rechten und einer linken Kante des resistiven Touch-Panels (14/114) benachbart positioniert sind und dazu konfiguriert sind, davon erzeugte elektrische Signale zu empfangen;
eine Dichtung (12), die eine im Wesentlichen luftdichte Abdichtung zwischen dem elektronischen Display (16/112) und dem resistiven Touch-Panel (14/114) bereitstellt;
eine erste und eine zweite Eingabe-/Ausgabevorrichtung in Verbindung mit dem elektronischen Display (16/112) zum unabhängigen Betreiben jedes der nahtlosen Rasterabschnitte (216);
eine eine EMI-Abschirmung umfassende Röhre (18), wobei sich die Röhre (18) von innerhalb des Gehäuses durch eine Kante desselben zu einem Bereich außerhalb des Gehäuses erstreckt, wobei die erste und die zweite Eingabe-/Ausgabevorrichtung in der Röhre (18) aufgenommen sind, wobei sich das Paar Eingabe-/Ausgabevorrichtungen durch die Röhre (18) erstreckt; und
ein Steuergerät in Verbindung mit dem elektronischen Display (16/112) und der resistiven Touch-Panel (14/114), wobei das Steuergerät dazu konfiguriert ist, das angezeigte Bild derart zu verschieben, dass das angezeigte Bild vollständig einer Seite des Paars angrenzender nahtloser Rasterabschnitte (216) entspricht, falls einer der nahtlosen Rasterabschnitte (216) funktionsunfähig wird, wobei das Steuergerät ferner dazu konfiguriert ist, die verwendete Eingabe-/Ausgabevorrichtung automatisch zu wechseln, falls eine der Eingabe-/Ausgabevorrichtungen funktionsunfähig wird;
wobei es sich bei dem elektronischen Display (16/112) um ein Flüssigkristalldisplay handelt;
wobei das resistive Touch-Panel (14/114) über und parallel zu dem elektronischen Display (16/112) angeordnet ist;
wobei jede Zeile des Touch-Panel-Rasters einen elektronischen Stromkreis (400) umfasst; und
wobei die elektronischen Stromkreise (400) jeweils eine mit einer Zahl von Kondensatoren (412) parallel geschaltete erste Zenerdiode (410) umfassen, wobei zwischen jedem angrenzenden Paar der Zahl von Kondensatoren (412) eine Induktionsspule (416) bereitgestellt ist, wobei auf einen letzten der Zahl von Kondensatoren (412) eine zweite Zenerdiode (410) folgt und damit parallel geschaltet ist.

2. Anordnung nach Anspruch 1, wobei:
das elektronische Display (16/112) aus einer Glasabdeckscheibe (310) besteht, die über einem linearen Polarisator (312) angeordnet ist, der über einem Viertelwellenretarder (314) angeordnet ist, der über einer oberen Glasscheibe (316) angeordnet ist, der über einem optisch klaren Klebstoff (318) angeordnet ist, der über einer unteren Glasscheibe (320) angeordnet ist, die über einer Indium-Zinnoxidschicht (322) angeordnet ist, die über einem Viertelwellenretarder (324) angeordnet ist; und
die Glasabdeckscheibe (310) eine spiegelfreie und schmutzabweisende Beschichtung umfasst.

3. Touch-Panel-Anordnung mit Redundanz und Merkmalen zur Verringerung von elektromagnetischen Störungen (EMI), umfassend:
ein elektronisches Display (16/112);
ein projiziert-kapazitives Touch-Panel (200), umfassend:
einen ersten und einen zweiten angrenzenden nahtlosen Touch-Pad (224/226), die Seitenkanten definieren;
einen ersten und einen zweiten vertikalen Sensor (234/228), die den Seitenkanten benachbart positioniert sind und dazu positioniert sind, von dem ersten und dem zweiten Touch-Pad (224/226) erzeugte elektrische Signale zu empfangen;
einen ersten und einen zweiten horizontalen Sensor (230/232), die entlang einer horizontalen Kante des projiziert-kapazitiven Touch-Panels (200) und dem ersten und dem zweiten Touch-Pad (224/226) benachbart positioniert sind und dazu konfiguriert sind, von dem ersten und dem zweiten Touch-Pad (224/226) erzeugte elektrische Signale zu erfassen;
eine erste und eine zweite Eingabe-/Ausgabevorrichtung in Verbindung mit dem elektronischen Display zum unabhängigen Betreiben des ersten und des zweiten Touch-Pads (224/226);
eine Dichtung (12), die dazu konfiguriert ist, eine im Wesentlichen luftdichte Abdichtung zwischen dem elektronischen Display (16/112) und dem projiziert-kapazitiven Touch-Panel (200) bereitzustellen; und
ein Steuergerät in Verbindung mit dem elektronischen Display (16/112) und dem projiziert-kapazitiven Touch-Panel (14/114), wobei das Steuergerät dazu konfiguriert ist, das angezeigte Bild derart zu verschieben, dass das angezeigte Bild vollständig einer Seite des Touch-Pads (216) entspricht, falls einer der Touch-Pads (224, 226 ) funktionsunfähig wird, wobei das Steuergerät ferner dazu konfiguriert ist, die verwendete Eingabe-/Ausgabevorrichtung automatisch zu wechseln, falls eine der Eingabe-/Ausgabevorrichtungen funktionsunfähig wird;
wobei es sich bei dem elektronischen Display (16/112) um ein Flüssigkristalldisplay handelt;
wobei das projiziert-kapazitive Touch-Panel (200) über und parallel zu dem elektronischen Display (16/112) angeordnet ist;
wobei jede Zeile der Touch-Matrix einen elektronischen Stromkreis (400) umfasst; und
wobei die elektronischen Stromkreise (400) jeweils eine mit einer Zahl von Kondensatoren (412) parallel geschaltete erste Zenerdiode (410) umfassen, wobei zwischen jedem angrenzenden Paar der Zahl von Kondensatoren (412) eine Induktionsspule (416) bereitgestellt ist, wobei auf einen letzten der Zahl von Kondensatoren (412) eine zweite Zenerdiode (410) folgt und damit parallel geschaltet ist.

4. Anordnung nach Anspruch 3, wobei:
das elektronische Display (16/112) aus einer Glasabdeckscheibe (310) besteht, die über einem linearen Polarisator (312) angeordnet ist, der über einem Viertelwellenretarder (314) angeordnet ist, der über einer oberen Glasscheibe (316) angeordnet ist, der über einem optisch klaren Klebstoff (318) angeordnet ist, der über einer unteren Glasscheibe (320) angeordnet ist, die über einer Indium-Zinnoxidschicht (322) angeordnet ist, die über einem Viertelwellenretarder (324) angeordnet ist; und
die Glasabdeckscheibe (310) eine spiegelfreie und schmutzabweisende Beschichtung umfasst.

## Revendications

1. Ensemble formant panneau tactile présentant des caractéristiques de réduction d'interférence électromagnétique (EMI) et de redondance comportant :
un boîtier ;
un affichage électronique (16/112) situé à l'intérieur dudit logement et adapté pour afficher des images ;
un panneau tactile résistif (14/114) situé à l'intérieur dudit logement et comportant
une paire de sections de grilles sans soudures et contiguës (216) et ;
une paire de récepteurs horizontaux supérieurs (210, 212) positionnés de manière adjacente par rapport à un bord supérieur du panneau tactile résistif (14/114) et configurés pour recevoir des signaux électriques générés en provenance de celui-ci ;
une paire de récepteurs horizontaux inférieurs (218, 220) positionnés de manière adjacente par rapport à un bord inférieur du panneau tactile résistif (14/114) et configurés pour recevoir des signaux électriques générés en provenance de celui-ci ; et
une paire de récepteurs verticaux (214, 222) positionnés de manière adjacente par rapport à des bords droit et gauche du panneau tactile résistif (14/114) et configurés pour recevoir des signaux électriques générés en provenance de celui-ci ;
un joint d'étanchéité (12) qui fournit une étanchéité sensiblement étanche à l'air entre ledit affichage électronique (16/112) et ledit panneau tactile résistif (14/114) ;
des premier et deuxième dispositifs d'entrée/sortie en communication avec ledit affichage électronique (16/112) pour faire fonctionner de manière indépendante chacune desdites sections de grilles sans soudures (216) ;
un canal (18) comportant un blindage EMI, dans lequel ledit canal (18) s'étend depuis l'intérieur dudit logement, au travers d'un bord de celui-ci, jusqu'à une zone à l'extérieur dudit logement, dans lequel lesdits premier et deuxième dispositifs d'entrée/sortie sont logés à l'intérieur dudit canal (18), ladite paire de dispositifs d'entrée/sortie s'étendant au travers dudit canal (18) ; et
un dispositif de commande en communication avec l'affichage électronique (16/112) et le panneau tactile résistif (14/114), dans lequel ledit dispositif de commande est configuré pour décaler l'image affichée de telle sorte que l'image affichée correspond entièrement à un côté de ladite paire de sections de grilles sans soudures et contiguës (216) si l'une desdites sections de grilles sans soudures (216) est rendue inutilisable, dans lequel le dispositif de commande est par ailleurs configuré pour changer automatiquement le dispositif d'entrée/sortie utilisé si l'un desdits dispositifs d'entrée/sortie est rendu inutilisable ;
dans lequel ledit affichage électronique (16/112) est un affichage à cristaux liquides ;
dans lequel ledit panneau tactile résistif (14/114) est situé au-dessus et en parallèle avec ledit affichage électronique (16/112) ;
dans lequel chaque ligne de la grille de panneau tactile (216) comporte un circuit électronique (400) ; et
dans lequel chacun des circuits électroniques (400) comporte une première diode Zener (410) en parallèle avec un certain nombre de condensateurs (412), dans lequel une bobine d'induction (416) est mise en œuvre entre chaque paire contiguë dudit nombre de condensateurs (412), dans lequel un dernier dudit nombre de condensateurs (412) est suivi par et en parallèle avec une deuxième diode Zener (410).

2. Ensemble selon la revendication 1, dans lequel :
l'affichage électronique (16/112) comporte un verre protecteur (310) situé au-dessus d'un polariseur rectiligne (312) situé au-dessus d'un retardateur quart d'onde (314) situé au-dessus d'un verre supérieur (316) situé au-dessus d'un adhésif optiquement transparent (318) situé au-dessus d'un verre inférieur (320) situé au-dessus d'une couche d'oxyde d'étain et d'indium (322) située au-dessus d'un retardateur quart d'onde (324) ; et
le verre protecteur (310) comporte un revêtement anti-réfléchissant et anti-tâches.

3. Ensemble formant panneau tactile présentant des caractéristiques de réduction d'interférence électromagnétique (EMI) et de redondance comportant :
un affichage électronique (16/112) ;
un panneau tactile capacitif projeté (200) comportant :
des premier et deuxième pavés tactiles sans soudures et contigus (224/226) définissant des côtés latéraux ;
des premier et deuxième capteurs verticaux (234/228) positionnés de manière adjacente par rapport aux bords latéraux et positionnés pour recevoir des signaux électriques générés en provenance des premier et deuxième pavés tactiles (224/226) ;
des premier et deuxième capteurs horizontaux (230/232) positionnés le long d'un bord horizontal du panneau tactile capacitif projeté (200) et de manière adjacente par rapport aux premier et deuxième pavés tactiles (224/226) et configurés pour détecter des signaux électriques générés en provenance des premier et deuxième pavés tactiles (224/226) ;
des premier et deuxième dispositifs d'entrée/sortie en communication avec ledit affichage électronique pour faire fonctionner de manière indépendante lesdits premier et deuxième pavés tactiles (224/226) ;
un joint d'étanchéité (12) configuré pour fournir une étanchéité sensiblement étanche à l'air entre ledit affichage électronique (16/112) et ledit panneau tactile capacitif projeté (200) ; et
un dispositif de commande en communication avec l'affichage électronique (16/112) et le panneau tactile capacitif projeté (14/114), dans lequel ledit dispositif de commande est configuré pour décaler l'image affichée de telle sorte que l'image affichée correspond entièrement à un côté desdits pavés tactiles (216) si l'un desdits pavés tactiles (224, 226) est rendu inutilisable, dans lequel le dispositif de commande est par ailleurs configuré pour changer automatiquement le dispositif d'entrée/sortie utilisé si l'un desdits dispositifs d'entrée/sortie est rendu inutilisable ;
dans lequel ledit affichage électronique (16/112) est un affichage à cristaux liquides ;
dans lequel ledit panneau tactile capacitif projeté (200) est situé au-dessus et en parallèle avec ledit affichage électronique (16/112) ;
dans lequel chaque ligne de la matrice tactile comporte un circuit électronique (400) ; et
dans lequel chacun des circuits électroniques (400) comporte une première diode Zener (410) en parallèle avec un certain nombre de condensateurs (412), dans lequel une bobine d'induction (416) est mise en œuvre entre chaque paire contiguë dudit nombre de condensateurs (412), dans lequel un dernier dudit nombre de condensateurs (412) est suivi par et en parallèle avec une deuxième diode Zener (410).

4. Ensemble selon la revendication 3, dans lequel :
l'affichage électronique (16/112) comporte un verre protecteur (310) situé au-dessus d'un polariseur rectiligne (312) situé au-dessus d'un retardateur quart d'onde (314) situé au-dessus d'un verre supérieur (316) situé au-dessus d'un adhésif optiquement transparent (318) situé au-dessus d'un verre inférieur (320) situé au-dessus d'une couche d'oxyde d'étain et d'indium (322) située au-dessus d'un retardateur quart d'onde (324) ; et
le verre protecteur (310) comporte un revêtement anti-réfléchissant et anti-tâches.
